# EUROPÄISCHE PATENTANMELDUNG

(11) **EP 2 657 772 A1**
(43) Veröffentlichungstag der Anmeldung: **30.10.2013**
(21) Anmeldenummer: 13161302.8
(22) Anmeldetag: 27.03.2013
(51) Int. Cl.: G03G 7/00

(54) **Aufzeichnungsmaterial für elektrofotografische Druckverfahren**

(30) Priorität: 27.04.2012 DE 102012103765
(71) Anmelder: Schoeller Technocell GmbH & Co. KG, 49086 Osnabrück (DE)
(72) Erfinder: Dr. Kozlowski, Christoph, 49076 Osnabrück (DE); Dr. Overberg, Andreas, 49078 Osnabrück (DE)
(74) Vertreter: Cohausz & Florack

(57) **Zusammenfassung**

Beschrieben wird ein Aufzeichnungsmaterial für elektrofotografische Druckverfahren, das ein Trägermaterial und eine ein Glanzpigment enthaltende toneraufnehmende Schicht enthält und zur Herstellung von fotoähnlichen Bildern unter Verwendung von sowohl Trocken- als auch Flüssigtonern geeignet ist.

## Beschreibung

### GEBIET DER ERFINDUNG

Die Erfindung betrifft ein Aufzeichnungsmaterial, mit dem Bilder in Fotoqualität mit elektrofotografischen Druckverfahren unter Verwendung von Flüssig- und Trockentonern erzeugt werden können.

### HINTERGRUND DER ERFINDUNG

Dem Laserdrucker liegt das Prinzip der Elektrofotografie zugrunde. Die Elektrofotografie erzeugt durch eine Abbildung bzw. Belichtung eines Fotoleiters mit dem optischen Abbild einer Vorlage ein latentes Bild aus elektrischen Ladungen, das nachfolgend dazu benutzt wird, selektiv einen Toner aufzutragen (Entwicklung) und ein Abbild (Kopie) der Vorlage, beispielsweise auf Papier, zu erzeugen. Man unterscheidet direkte und indirekte sowie nasse und trockene Elektrofotografie. Die Nassverfahren, auch Flüssigtonerverfahren genannt, nutzen als Entwickler eine Suspension aus einem aliphatischen Lösungsmittel mit geringer Dielektrizitätskonstante und dem Toner, während das Trockenverfahren ein Pulver verwendet. Mit Hilfe eines gebündelten Laserstrahls und eines rotierenden Spiegels wird auf die lichtempfindliche Bildtrommel ein Abbild der gewünschten Seite gezeichnet. Die Trommel ist zunächst negativ aufgeladen, wobei die Ladung an den Stellen wieder aufgehoben wird, auf die der Laserstrahl trifft. Die Form der entladenen Flächen auf der Trommel entspricht dem späteren Ausdruck. Über eine Rolle mit negativ geladenem Toner, der an den entladenen Stellen auf der Bildtrommel haften bleibt wird der Toner auf die Trommel gebracht.

Beim Trockentonerverfahren wird das Papier anschließend über die Bildtrommel geführt. Es streift nur an der Trommel vorbei. Hinter dem Papier wird ein Potenzialfeld aufgebaut. Der Toner wird auf das Papier übertragen und ist dort zunächst lose. Anschließend wird der Toner mit Hilfe einer heißen Walze und unter Druck fixiert. Die Trommel wird entladen und überflüssiger Toner von ihr entfernt.

Bei dem Flüssigtonerverfahren wird die Tonersuspension zunächst auf einen beheizten Gummizylinder übertragen, auf dem die Trägerflüssigkeit verdampft und der Toner plastifiziert wird. Von dieser Zwischenwalze (intermediate drum) wird das Tonerbild dann auf das Aufzeichnungsblatt übertragen.

Die mit Hilfe eines Laser-Druckers erzeugten Bilder sollten eine mit einem Foto vergleichbare Qualität erreichen. Hierzu gehören Eigenschaften wie Glanz, Steifigkeit, Opazität, eine hohe Auflösung und Bildschärfe sowie eine gute Lichtbeständigkeit.

In der Publikation von HP (Hannelore Breuer): Das Know-how des Druckens: Die neuen Laser-Papiere von HP vom 13.05.2005, erhalten unter 41131.www4.hp.com/Backgrounder_Neue_Laser-Papiere.pdf (Stand vom 31.08.2010) werden mehrlagig beschichtete Papiere mit beidseitig "offener" poröser Oberfläche beschrieben. Unter Verwendung solche Papiere hergestellte Bilder weisen aber eine von herkömmlichen Silberhalogenidbildern deutlich unterschiedliche Haptik und einen unterschiedlichen Glanz der Oberfläche auf.

Um dem Ziel einer fotoähnlichen Qualität näher zu kommen, werden elektrofotografisch erzeugte Bilder auf Trägermaterialien produziert, die die Haptik und das Aussehen eines typischen Silbersalz-Fotos aufweisen. In der DE 44 35 350 C1 ist ein Bildempfangsmaterial für die Elektrofotografie beschrieben, das ein mit Thermoplasten beschichtetes Basispapier und eine Toner-Empfangsschicht sowie eine antistatische Rückseitenschicht umfasst. Nachteilig an diesem Material ist, dass es hinsichtlich der Tonerfixierung und des Verhaltens im Drucker noch verbesserungsbedürftig ist. Des Weiteren zeigen solche Materialien nach dem Druck eines Bildes störende glänzende Flecken, die von den in den Tonerformulierungen häufig als Trennmittel eingesetzten ölartigen Substanzen herrühren.

Die DE 10 2011 078 714 A1 beschreibt Aufzeichnungsmaterialien mit toneraufnehmenden Schichten, die anorganische feine Partikel enthalten und Poren mit einem Radius von 100 nm oder weniger aufweisen. Die Anwendung solcher Materialien ist aber, wie in diesem Dokument beschrieben, auf das Flüssigtonerverfahren beschränkt. Bei einer Weiterverarbeitung von Ausdrucken auf solchen porösen Materialien, beispielsweise zu Fotobüchern, besteht die Gefahr, dass die porösen toneraufnehmenden Schichten beim Falzen brechen und die Ausdrucke an diesen Stellen unerwünschte weiße Bruchlinien zeigen.

Weitere Aufzeichnungsmaterialien für elektrofotografische Verfahren sind beispielsweise beschrieben in EP 0 789 281 B1, EP 1 115 559, JP 2006-215 494, JP 2007-188 055 und JP 2010-020 283.

### ZUSAMMENFASSUNG DER ERFINDUNG

Es ist daher Aufgabe der Erfindung, ein Aufzeichnungsmaterial bereit zu stellen, welches mindestens von einer Seite sowohl unter Verwendung von Flüssig- als auch Trockentonern bedruckbar ist, eine gute, mit einem Silbersalz-Foto vergleichbare Bildqualität und neben einer guten Licht- und Ozonresistenz bei Lagerung ein gutes Einzugs- und Transport-Verhalten im Drucker sowie eine gute Stapelfähigkeit aufweist.

Gelöst wird diese Aufgabe durch ein Aufzeichnungsmaterial mit einem Trägermaterial und mindestens einer toneraufnehmenden Schicht, die ein Glanzpigment mit einer Teilchengröße von höchstens 100 µm, ein wasserdispergierbares und/oder wasserlösliches Bindemittel enthält. Besonders gut geeignet sind Glanzpigmente mit einer Korngrößenverteilung von 5 bis 60 µm (gemessen nach Laserbeugung). Insbesondere gut geeignet sind Glanzpigmente, die eine Ölabsorption von 60 bis 120 g/100g (gemessen nach EN ISO 787-5) aufweisen. Das wasserlösliche oder wasserdispergierbare Bindemittel ist, bezogen auf die Masse des Pigments in der toneraufnehmenden Schicht, in einer Menge vorhanden, so dass die toneraufnehmende Schicht in Form einer geschlossenen Schicht vorliegt. Die toneraufnehmende Schicht ist daher eine porenfreie Schicht.

Überraschend wurde festgestellt, dass keine zusätzliche elektrisch leitfähige Substanz in benötigt wird, wie sie üblicherweise in der toneraufnehmenden Schicht enthalten ist.

### DETAILLIERTE BESCHREIBUNG DER ERFINDUNG

Das Trägermaterial kann ein unbeschichtetes Rohpapier, ein gestrichenes Rohpapier (mit einer pigmenthaltigen Schicht versehenes Rohpapier), vorzugsweise jedoch ein kunstharzbeschichtetes Papier sein.

Die toneraufnehmende Schicht kann vorzugsweise zusätzlich ein wasserlösliches (Meth)acrylsäure-Acrylsäureester-Copolymer und eine elektroleitfähige Substanz enthalten, wobei die elektroleitfähige Substanz ein elektroleitfähiges feinteiliges Oxid oder ein elektroleitfähiges Polymer sein kann.

Für die Zwecke der Erfindung versteht man unter dem Begriff Rohpapier ein unbeschichtetes oder oberflächengeleimtes Papier. Ein Rohpapier kann neben Zellstofffasern, Leimungsmittel wie Alkylkentendimere, Fettsäuren und/oder Fettsäuresalze, epoxydierte Fettsäureamide, Alkenyl- oder Alkylbernsteinsäureanhydrid, Nassfestmittel wie Polyamin-Polyamid-Epichlorhydrin, Trockenfestmittel wie anionische, kationische oder amphotere Polyamide oder kationische Stärken, optische Aufheller, Füllstoffe, Pigmente, Farbstoffe, Entschäumer und weitere in der Papierindustrie bekannte Hilfsmittel enthalten kann. Das Rohpapier kann oberflächengeleimt sein. Hierzu geeignete Leimmittel sind beispielsweise Polyvinylalkohol oder oxydierte Stärke. Das Rohpapier kann auf einer Fourdrinier-oder einer Yankee-Papiermaschine(Zylinder-Papiermaschine) hergestellt werden. Das Flächengewicht des Rohpapiers kann 50 bis 250 g/m², insbesondere 80 bis 180 g/m², betragen. Das Rohpapier kann in unverdichteter oder verdichteter Form (geglättet) eingesetzt werden. Besonders gut geeignet sind Rohpapiere mit einer Dichte von 0,8 bis 1,2 g/cm³, insbesondere 0,90 bis 1,1 g/cm³. Als Zellstofffasern können beispielsweise gebleichter Hartholz-Kraftzellstoff (LBKP), gebleichter Nadelholz-Kraftzellstoff (NBKP), gebleichter Laubholzsulfitzellstoff (LBSP) oder gebleichter Nadelholzsulfitzellstoff (NBSP) eingesetzt werden. Es können auch aus Papierabfällen gewonnene Zellstofffasern verwendet werden. Die genannten Zellstofffasern können auch gemischt eingesetzt werden und Anteile anderer Fasern, zum Beispiel von Kunstharzfasern, zugemischt werden. Bevorzugt jedoch werden Zellstofffasern aus 100% Laubholzzellstoff eingesetzt. Die mittlere Faserlänge des ungemahlenen Zellstoffs beträgt vorzugsweise 0,6 bis 0,85 mm (Kajaani-Messung). Ferner weist der Zellstoff einen Ligningehalt von weniger als 0,05 Gew.-% auf, insbesondere 0,01 bis 0,03 Gew.-%, bezogen auf die Masse des Zellstoffs.

Als Füllstoff können beispielsweise Kaoline, Calciumcarbonat in seinen natürlichen Formen wie Kalkstein, Marmor oder Dolomitstein, gefälltes Calciumcarbonat, Calciumsulfat, Bariumsulfat, Titaniumdioxid, Talkum, Silica, Aluminiumoxid und deren Gemische im Rohpapier eingesetzt werden. Besonders geeignet ist Calciumcarbonat mit einer Korngrößenverteilung, bei der mindestens 60 % der Teilchen kleiner sind als 2 µm und höchstens 40 % kleiner sind als 1 µm. In einer besonderen Ausgestaltung der Erfindung wird Calcit mit einer Korngrößenverteilung eingesetzt, bei der etwa 25 % der Teilchen eine Teilchengröße von weniger als 1 µm und etwa 85 % der Teilchen eine Teilchengröße von weniger als 2 µm aufweisen.

In einer besonderen Ausführungsform der Erfindung kann auf dem Rohpapier eine pigmenthaltige Schicht angeordnet sein. Das Pigment kann ein Metalloxid, Silikat, Carbonat, Sulfid oder Sulfat sein. Besonders gut geeignet sind Pigmente wie Kaoline, Talkum, Calciumcarbonat und/oder Bariumsulfat. Besonders bevorzugt ist ein Pigment mit einer engen Korngrößenverteilung, bei der mindestens 70% der Pigmentpartikel eine Größe von kleiner als 1µm aufweisen. Die pigmenthaltige Schicht kann mit allen in der Papierherstellung üblichen Auftragsaggregaten inline oder offline aufgebracht werden, wobei die Auftragsmenge so gewählt wird, dass nach dem Trocknen das Auftragsgewicht 0,1 bis 30 g/m², insbesondere 1 bis 20 g/m², oder gemäß einer besonders bevorzugten Ausführungsform 2 bis 8 g/m² beträgt. In einer bevorzugten Ausführungsform wird die pigmenthaltige Schicht mit einer innerhalb der Papiermaschine integrierten Leimpresse oder Filmpresse aufgetragen.

In einer bevorzugten Ausführungsform der Erfindung kann das Rohpapier oder das gestrichene Rohpapier beidseitig mit Kunstharzschichten versehen sein. Die Kunstharzschichten (vorderseitige und/oder rückseitige Kunstharzschicht) können vorzugsweise ein thermoplastisches Polymer enthalten. Insbesondere geeignet hierfür sind Polyolefine, beispielsweise Polyethylen niedriger Dichte (LDPE), Polyethylen hoher Dichte (HDPE), Polypropylen, 4-Methylpenten-1 und deren Gemische sowie Polyester, beispielsweise Polycarbonate. In einer besonderen Ausgestaltung der Erfindung ist das thermoplastische Polymer ein biologisch abbaubares Polymer und/oder ein Polymer auf Basis nachwachsender Rohstoffe wie ein linearer Polyester, thermoplastische modifizierte Stärke, oder Polymilchsäure oder eine Mischung dieser Polymere untereinander oder mit anderen Polymeren.

In einer weiteren besonders bevorzugten Ausgestaltung der Erfindung enthält die vorderseitige und/oder rückseitige Kunstharzschicht mindestens 40 Gew.-% HDPE mit einer Dichte von mehr als 0,95 g/cm³, insbesondere 60 bis 80 Gew.-%. Besonders bevorzugt ist eine Zusammensetzung, die aus 65 Gew.-% HDPE mit einer Dichte von mehr als 0,95 g/cm³und 35 Gew.-% LDPE mit einer Dichte von weniger als 0,935 g/cm³ besteht.

Die Kunstharzschichten können Weißpigmente wie Titandioxid sowie weitere Hilfsstoffe wie optische Aufheller, Farbstoffe und Dispergierhilfsmittel enthalten. In einer besonderen Ausgestaltungsform der Erfindung werden antistatisch wirkende Substanzen, insbesondere elektrisch leitfähige anorganische Pigmente, zu den Kunstharzschichten zugefügt.

Das Auftragsgewicht der Kunstharzschichten kann 5 bis 50 g/m², insbesondere 5 bis 40 g/m², bevorzugt jedoch 10 bis 30 g/m² betragen. Die Kunstharzschicht kann auf das Rohpapier oder das gestrichene Rohpapier einschichtig extrudiert oder mehrschichtig coextrudiert werden. Die Extrusionsbeschichtung kann mit Maschinengeschwindigkeiten bis 600 m/min erfolgen.

Die Kunstharzschichten können in einer Ausgestaltungsform der Erfindung symmetrisch auf beiden Seiten des Rohpapiers aufgetragen werden, d.h. die Kunstharzschichten auf beiden Seiten des Rohpapiers weisen dieselbe Zusammensetzung auf und sind hinsichtlich der Oberflächentopografie identisch. Erfindungsgemäß kann die Oberfläche der Kunstharzschicht, je *nachdem welche Bildoberfläche (glänzend oder strukturiert*/*matt) gewünscht wird,* auf beiden Seiten Rauhigkeitswerte Rz von 0,03 bis 15 µm aufweisen. Die Bestimmung der Rauhigkeit Rz erfolgt durch einen Hommel-Oberflächenabtaster nach DIN 4768.

In einer weiteren Ausgestaltungsform der Erfindung, die ein einseitig bedruckbares glänzendes Aufzeichnungsmaterial zum Ziel hat, hat die Kunstharzschicht auf derjenigen Seite des Aufzeichnungsmaterials, die die toneraufnehmende Schicht trägt und die für das Bedrucken vorgesehen ist (Vorderseite), eine geringere Rauhigkeit als die auf der Rückseite. In dieser Ausgestaltungsform weist die für die Bedruckung vorgesehene Seite der Kunstharzschicht Rauhigkeitswerte Rz von 0,03 bis 1,8 µm auf, während die auf der nicht zur Bedruckung vorgesehenen Seite angeordnete Kunstharzschicht Rauhigkeitswerte Rz von 12 bis 15 µm aufweist.

Die zum Bedrucken vorgesehene Seite des Trägermaterials wird mit einer toneraufnehmenden Beschichtungslösung gestrichen, die nach Trocknung eine toneraufnehmende Schicht bildet. In der besonderen Ausgestaltungsform der Erfindung, die ein beidseitig bedruckbares Auszeichnungsmaterial zum Ziel hat, ist die toneraufnehmende Schicht auf beiden Seiten des Trägermaterials aufgetragen.

Die toneraufnehmende Schicht enthält vorzugsweise mindestens ein Glanzpigment mit einer Teilchengröße von höchstens 100 µm, insbesondere 5 bis 60 µm, und einer Ölabsorption von 60 bis 120 g/100 g (gemessen nach EN ISO 787-5), ein wasserdispergierbares und/oder ein wasserlösliches Bindemittel.

Unter Glanzpigmente sind erfindungsgemäß solche Pigmente zu verstehen, bei denen durch gerichtete Reflexion und/oder Interferenz an plättchenförmig ausgebildeten und parallel orientierten, stark lichtbrechenden Pigmentteilchen Glanzeffekte entstehen. Dabei ist der Effekt vom Betrachtungswinkel abhängig.

Als Glanzpigment können alle Pigmente mit einem plättchenförmigen transparenten oder einem nichttransparenten Trägermaterial, dessen Oberfläche mit einer oder mehreren Metalloxidschichten überzogen ist, eingesetzt werden. Als Metalloxide werden dabei beispielsweise Titandioxid, Zirkoniumoxid, Siliciumdioxid, Aluminiumoxid, Chromoxid, Kobaltoxid oder Eisenoxide verwendet. Als Trägermaterial besonders gut geeignet ist Glimmer, andere Schichtsilikate wie Talkum oder Kaolin, SiO₂-Flakes, TiO₂-Flakes oder Al₂O₃-Flakes. Diese Glanzpigmente sind bekannt und größtenteils kommerziell, z. B unter dem Handelsnamen IRIODIN ^{®} oder Bi-Flair^{®} erhältlich.

Das Bindemittel in der toneraufnehmenden Schicht kann jeder für Papierbeschichtungen gebräuchliche Binder sein, bevorzugt werden Stärke, Polyvinylalkohol, Acrylate oder Copolymere von Acrylaten mit anderen Monomeren verwendet. Besonders bevorzugt sind wasserdispergierbare Ethylenacrylsäure-Copolymere, insbesondere solche mit einem Schmelzbereich von 70 bis 100°C und wasserlösliche Polymere wie Polyvinylalkohol (teilverseift oder vollverseift), die einzeln oder als Gemisch verwendet werden können. Das Mischverhältnis Ethylenacrylsäure-Copolymer/Polyvinylalkohol kann 10:1 bis 1:1 betragen.

Das Bindemittel ist vorzugsweise in einer derartigen Menge in der toneraufnehmenden Schicht vorhanden, dass die Zwischenräume zwischen den Glanzpigmentteilechen in der toneraufnehmenden Schicht vollständig ausgefüllt sind. Die toneraufnehmende Schicht enthält daher keine Hohlräume. Sie ist porenfrei. Porenfrei im Sinne der Erfindung bedeutet, dass weniger als 0,3 ml, vorzugsweise weniger als 0,2 oder weniger als 0,1 ml Porenvolumen für Poren kleiner 1 µm pro m² Aufzeichnungsblatt in der tonerenthaltenden Schicht vorhanden ist (gemessen mit Quecksilber-Porosimetrie; Quecksilber-Porosimeter PASCAL 240 der Firma POROTEC GmbH).

Das Glanzpigment und das Bindemittel können in einem Mengenverhältnis von 5:95, vorzugsweise 40:60 bis 60:40 eingesetzt werden, wobei sich die Mengenangaben auf die Masse der getrockneten toneraufnehmenden Schicht beziehen. Besonders bevorzugt beträgt das Massenverhältnis Glanzpigment zu Bindemittel in der toneraufnehmenden Schicht 10 : 90, vorzugsweise 20 : 80 bis 80 : 20.

In einer besonders bevorzugten Ausführungsform enthält die toneraufnehmende Schicht zusätzlich als weiteres Bindemittel ein wasserlösliches (Meth)acrylsäure-Acrylsäureester-Copolymer, dessen Menge 2 bis 12 Gew.-%, vorzugsweise 4 bis 6 Gew.-% betragen kann, bezogen auf die Masse der getrockneten Schicht.

In einer weiteren Ausführungsform der Erfindung kann die toneraufnehmende Schicht eine elektroleitfähige Substanz enthalten.

Eine zusätzliche elektrisch leitfähige Substanz muss in der toneraufnehmenden Schicht nicht enthalten sein.

Gemäß einer alternativen Ausführungsform kann die toneraufnehmende Schicht eine elektrisch leitfähige Substanz enthalten. Die elektrisch leitfähige Substanz kann ein elektrisch leitfähiges Polymer und/oder ein elektrisch leitfähiges Pigment sein.

Erfindungsgemäße elektroleitfähige (elektrisch leitfähig) Polymere können solche sein, bei denen die elektrische Ladung in Form von Ionen transportiert wird, wie Polystyrolsulfonsäure. Bevorzugt werden aber Polymere, in den die elektrische Ladung in Form von Elektronen oder Defektelektronen transportiert werden, beispielsweise Polyaniline und Polythiophene. Besonders bevorzugt ist als leitfähiges Polymer das mit Polystyrolsäure dotierte Poly(3,4-ethylen-dioxythiophen) (PE-DOT:PSS), welches zum Beispiel unter den Namen CLEVIOS^{®} oder ORGACON^{®} erhältlich ist. Wird erfindungsgemäß ein Polymer als elektroleitfähige Substanz in der toneraufnehmenden Schicht eingesetzt, kann diese in einer besonderen Ausgestaltung der Erfindung den wasserlöslichen oder wasserdispergierbaren Binder ganz oder teilweise ersetzten.

Erfindungsgemäße leitfähige Pigmente können unter anderem aus Metallpulver oder Kohlenstoff bestehen. Bevorzugt werden jedoch Oxide wie Antimonoxid, Zinnoxid, Indiumoxid oder besonders bevorzugt Titandioxid oder Zinkoxid oder Mischoxide der Elemente Antimon, Indium, Titan, Zink oder Zinn. Die erfindungsgemäßen leitfähigen Pigmente weisen vorzugsweise eine mittlere Partikelgröße von kleiner als 1000 nm, besonders bevorzugt kleiner als 200 nm auf. Wird ein leitfähiges Pigment als elektroleitfähige Komponente einsetzt, kann diese in einer bevorzugten Ausführungsform der Erfindung auch gleichzeitig das feinteilige Pigment der toneraufnehmenden Schicht darstellen.

Die Menge der elektrisch leitfähigen Komponente in der toneraufnehmenden Schicht wird so gewählt, dass der Oberflächenwiderstand des Aufzeichnungsmaterials weniger als 15 log (Ohm/cm) beträgt, gemessen nach DIN 53483. Sie kann erfindungsgemäß in einem Bereich zwischen 0 bis 50 Gew.-%, insbesondere 0,1 bis 4,0 Gew.-%, bezogen auf die Masse der getrockneten Schicht, liegen.

In einer weiteren Ausgestaltung der Erfindung enthält die toneraufnehmende Schicht zusätzlich anionische oder nichtionische oberflächenaktive Mittel in einer Menge von 0,01 bis 4,0 Gew.-%, insbesondere 0,05 bis 2,5 Gew.-%, bezogen auf die getrocknete Schicht.

Die toneraufnehmende Schicht kann gegebenenfalls auch weitere Hilfsmittel enthalten, beispielsweise feinteilige Pigmente, Mattierungsmittel, Farbstoffe, Vernetzungsmittel, Gleitmittel, Anti-Blocking-Mittel und andere übliche Additive.

Das feinteilige Pigment ist erfindungsgemäß ein feinteiliges anorganisches Pigment, beispielsweise Siliciumdioxid, Aluminiumoxid, Aluminiumoxidhydrat, Aluminiumsilicat, Calciumcarbonat, Zinkoxid, Zinnoxid, Antimonoxid, Titandioxid, Indiumoxid oder ein Mischoxid dieser Oxide. In einer besonderen bevorzugten Ausführungsform ist das feinteilige Pigment Zinkoxid, Zinnoxid, Antimonoxid, Titandioxid Indiumoxid oder ein Mischoxid dieser Oxide. Die feinteiligen Pigmente können einzeln oder als Mischungen in der toneraufnehmenden Schicht vorhanden sein. Das feinteilige Pigment in der toneraufnehmenden Schicht weist vorzugsweise eine mittlere Partikelgröße von kleiner als 1000 nm, insbesondere kleiner als 200 nm auf. Bevorzugt werden insbesondere Pigmente mit einer BET-Oberfläche von 30 m²/g bis 400m²/g. Erfindungsgemäße Pigmente können durch das Flammenverfahren oder durch nasschemische Fällungsverfahren erhalten werden.

Die Beschichtungsmasse zur Bildung der toneraufnehmenden Schicht kann mit allen in der Papierherstellung üblichen Auftragsaggregaten inline oder offline aufgebracht werden, wobei die Menge so gewählt wird, dass nach dem Trocknen das Auftragsgewicht höchstens 5 g/m², insbesondere 0,5 bis 3 g/m², oder gemäß einer besonders bevorzugten Ausführungsform 1 bis 2 g/m² beträgt. Die Beschichtungsmasse kann als Strich mit Hilfe eines üblichen, innerhalb der Extrusionsbeschichtungsanlage integrierten Auftragswerkes aufgetragen werden. Hierzu besonders gut geeignet ist beispielsweise ein 3-Walzenauftrag oder eine Rakelvorrichtung.

In einer weiteren Ausgestaltung der Erfindung können auf die toneraufnehmende Schicht weitere Schichten wie Schutzschichten oder glanzverbessernde Schichten aufgetragen werden. Das Auftragsgewicht solcher Schichten ist vorzugsweise kleiner als 1 g_{/}m².

Die folgenden Beispiele dienen der weiteren Erläuterung der Erfindung.

### BEISPIELE

### Rohpapier

Ein Rohpapier wurde aus Eukalyptus-Zellstoff hergestellt. Zur Mahlung wurde der Zellstoff als etwa 5 %ige wässrige Suspension (Dickstoff) mit Hilfe eines Refiners auf einen Mahlgrad von 36 °SR gemahlen. Die mittlere Faserlänge betrug 0,64 mm. Die Konzentration der Zellstofffasern im Dünnstoff betrug 1 Gew.-%, bezogen auf die Masse der Zellstoffsuspension. Dem Dünnstoff wurden Zusatzstoffe zugesetzt wie kationische Stärke in einer Menge von 0,4 Gew.-%, als ein neutrales Leimungsmittel Alkylketendimer (AKD)in einer Menge von 0,48 Gew.-%, Nassfestmittel Polyamin-Polyamid-Epichlorhydrinharz (Kymene®) in einer Menge von 0,36 Gew.-% und ein natürliches CaCO₃ in einer Menge von 10 Gew.-%. Die Mengenangaben beziehen sich auf die Zellstoffmasse. Der Dünnstoff, dessen pH-Wert auf etwa 7,5 eingestellt wurde, wurde vom Stoffauflauf auf das Sieb der Papiermaschine gebracht, worauf die Blattbildung unter Entwässerung der Bahn in der Siebpartie der Papiermaschine erfolgte. In der Pressenpartie erfolgte die weitere Entwässerung der Papierbahn auf einen Wassergehalt von 60 Gew.-%, bezogen auf das Bahngewicht. Die weitere Trocknung erfolgte in der Trockenpartie der Papiermaschine mit beheizten Trockenzylindern. Es entstand ein Rohpapier mit einem Flächengewicht von 160 g/m² und einer Feuchte von etwa 7%. Das so erhaltene Material wurde für die nachfolgende Kunstharzbeschichtung im Extruder eingesetzt.

### Trägermaterial A

Die zur Bedruckung vorgesehene Oberfläche (Vorderseite) des Rohpapiers wurde nach Bestrahlung mit einer Corona-Entladung in herkömmlicherweise Weise mit einem Kunstharzgemisch folgender Zusammensetzung beschichtet: 50 Gew. eines Polyethylens niedriger Dichte (LDPE, d=0,923 g/m<2>) und 50 Gew. % eines Polyethylens hoher Dichte (HDPE, d=0,964 g/cm<3>). Die Beschichtung erfolgte in einem Laminator (Tandemextruder) bei einer Extrusionsgeschwindigkeitvon 250 m /min unter dem Einsatz eines Kühlzylinders der Fa. BEP Service Technology, dessen Oberfläche einen mittleren Rz-Wert von 1,2 µm und einen Ra-Wert von 0,2 µm (gemessen nach DIN 4768) aufwies. Die Oberfläche des Kühlzylinders wurde durch Sandstrahlen bzw. Strahlen mit anderem Strahlgut erzeugt und verchromt. Das Auftragsgewicht betrug 30 g/m².

Die der zu bedruckenden Seite gegenüberliegende Seite (Rückseite) des Rohpapiers wurde mit einem Polyethylengemisch aus 30 Gew.-% eines Polyethylens niedriger Dichte (LDPE, d=0,923 g/cm³) und 70 Gew.-% eines Polyethylens hoher Dichte (HDPE, d=0,964 g/cm³) mit einem Auftragsgewicht von 30 g/m² im Extruder beschichtet. Der Kühlzylinder wurde so gewählt, dass die resultierende Oberfläche der Rückseite eine Rauhigkeit Rz von 15 µm aufwies (gemessen nach DIN 4768).

### Trägermaterial B

Die zur Bedruckung vorgesehene Oberfläche (Vorderseite) des Rohpapiers wurde nach Bestrahlung mit einer Corona-Entladung mit einem Kunstharzgemisch wie bei Trägermaterial A beschichtet. Das Auftragsgewicht betrug 30 g/m². Die Beschichtung erfolgte unter dem Einsatz eines Kühlzylinders, dessen Oberfläche einen mittleren Rz-Wert von 11,2 µm, gemessen nach DIN 4768) aufwies. Die Oberfläche des Kühlzylinders wurde durch Sandstrahlen bzw. Strahlen mit anderem Strahlgut erzeugt und verchromt.

Die der zu bedruckenden Seite gegenüberliegende Seite (Rückseite) des Rohpapiers wurde mit einem Polyethylengemisch wie bei Trägermaterial A beschichtet. Der Kühlzylinder wurde so gewählt, dass die resultierende Oberfläche der Rückseite eine Rauhigkeit Rz von 15 µm aufwies (gemessen nach DIN 4768). Das Auftragsgewicht betrug 30 g/m².

Die Trägermaterialien A und B wurden anschließend auf der Vorderseite jeweils mit der toneraufnehmenden Streichmasse a und b beschichtet und getrocknet. Die Auftragsmenge der Streichmasse wurde so gewählt, dass sich ein Trockenauftrag von 3 g/m² ergab. Die Zusammensetzung der Streichmassen ist nachfolgend angegeben.

### Streichmasse a

7,8 g einer wässrigen Ethylenacrylat-Dispersion MICHEM PRIME^{®} 4990 R.E. (Polymergehalt 35,7 Gew.-%) und 3,1 g einer Polyvinylalkohol-Lösung (Mowiol 40-88, Polymergehalt 10 Gew.-%) wurden mit 3,1 g Glanzpigment IRIODIN^{®} 6103 (Teilchengröße: 5-40 µm, Ölabsorption 70-90 g/100 g, gemessen nach EN ISO 787-5), 1 g einer Dispersion von (Meth)acrylsäure-Copolymer (Rheovis^{®} AT 120, Polymergehalt 30 Gew.-%), 0,2 g Netzmittel Zonyl FSN^{®} und 84,8 g Wasser gemischt.

### Streichmasse b

Die Streichmasse wurde wie die Streichmasse a hergestellt, nur dass ein Glanzpigment IRIODIN^{®} 7205 (Teilchengröße: 10-60 µm, Ölabsorption 80 g/100 g, gemessen nach EN ISO 787-5) eingesetzt wurde.

### Streichmasse c

Die Streichmasse wurde wie die Streichmasse a hergestellt, nur dass ein Glanzpigment IRIODIN^{®} 100 (Teilchengröße: 10-60 µm).

### Streichmasse d

Die Streichmasse wurde wie die Streichmasse a hergestellt, nur dass ein Glanzpigment IRIODIN^{®} 123 (Teilchengröße: 10-60 µm).

### Streichmasse e

Die Streichmasse wurde wie die Streichmasse a hergestellt. nur dass ein Glanzpigment Bi-Flair^{®} 83 (Teilchengröße: ≤ 25 µm).

Die gemäß den Beispielen erhaltenen Aufzeichnungsmaterialien wurden den nachstehend beschriebenen Prüfungen unterzogen.

### Oberflächenwiderstand

Gemessen mit einer Kammelektrode nach DIN 53483, Angabe in log (Ohm/cm) .

Verklebungstest: Zwei Blätter des Trägermaterials in DIN-A4-Größe werden bei 23°C und 50% RF aufeinandergelegt und mit einem 10 kg-Gewicht belastet. Nach 65 Stunden werden die Blätter manuell getrennt und das Haften / Verkleben bewertet.
+: Keine Verklebung,
○: leichte Verklebung,
-: starke Verklebung

Tonerhaftung: Die Aufzeichnungsmaterialien werden mit einem elektrofotografischen Drucker vom Typ HP^{®} Indigo^{®} 6000 (Flüssigtoner) und einem Farbkopierer KonicaMinolta MC 5550 (trockentoner) bedruckt und bei 23°C / 50% RF die Haftung des Toners durch Aufkleben und Widerabziehen eines Klebestreifens der Sorte TESA 4104 beurteilt.
+: Tonerschicht bleibt unbeschädigt,
○: Tonerschicht etwas abgerissen,
-: Tonerschicht vollständig vom Träger abgerissen.

### FLOP-Index

Der FLOP bezeichnet die Änderung der kolorimetrischen Eigenschaften eines Materials unter verschiedenen Betrachtungswinkeln. Der FLOP wird unter mehreren Messwinkeln bestimmt. Er wird dann durch die farbmetrischen Messwerte aller gemessenen Winkel beschrieben. Für den Helligkeitsflop kann der sogenannte FLOP-Index angegeben werden. Dieser berechnet sich aus der Helligkeit L* nach dem CIELab-System, gemessen bei 5 Messwinkeln (15°, 25°, 45°, 75°, 110°).Die Messungen wurden mit Hilfe eines 5 Winkel-Spektralphotometrs (BYK-mac) durchgeführt.

Die Prüfergebnisse sind in nachfolgender Tabelle 1 zusammengefasst.

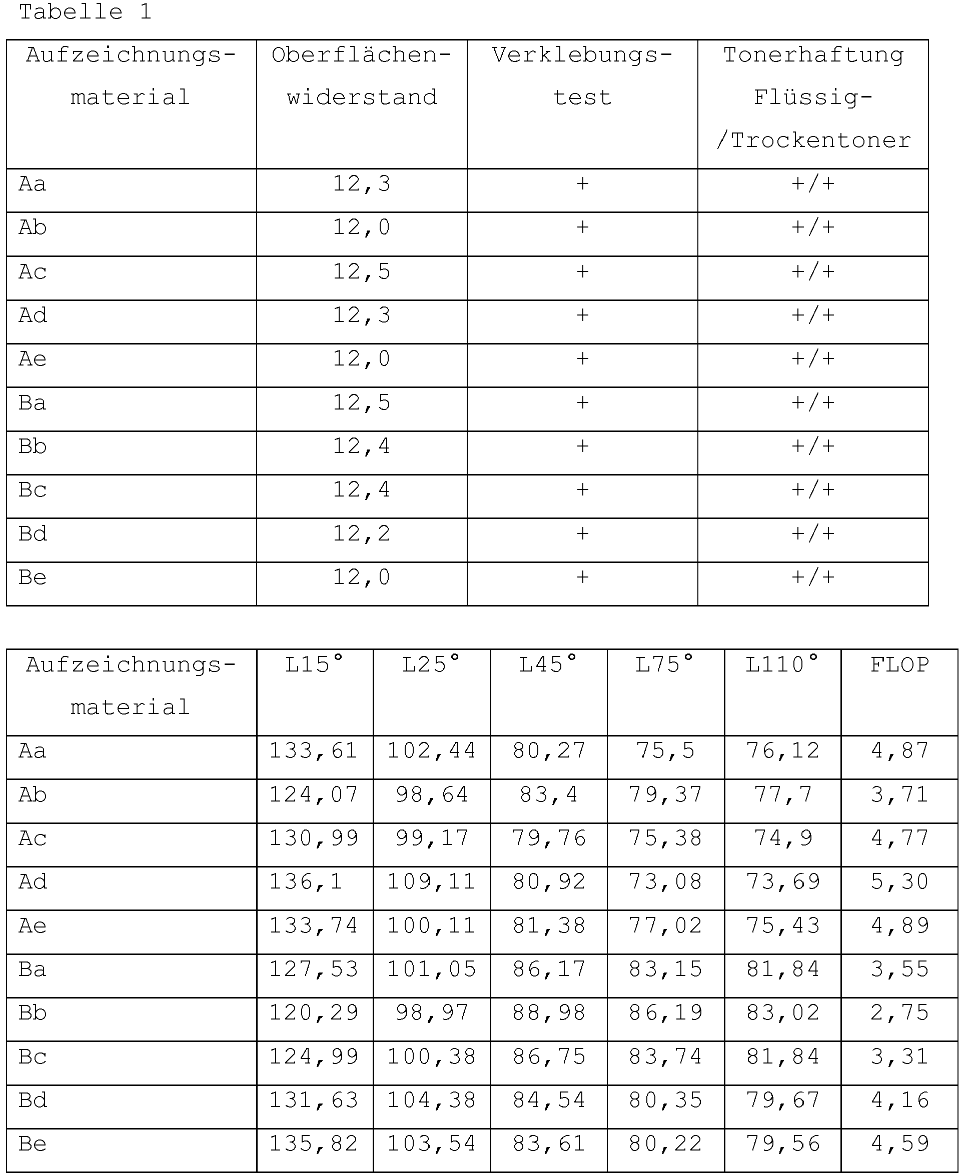

### BEWERTUNG DER ERGEBNISSE

Es zeigte sich, dass die unter Verwendung der erfindungsgemäßen Aufzeichnungsmaterialien erhaltenen Bilder ein mit Silberhalogenidbildern vergleichbares Aussehen und eine vergleichbare Haptik aufweisen. Die Haftung des Toners an der Oberfläche ist bei den erfindungsgemäßen Aufzeichnungsmaterialien gut, die Blätter verkleben nicht miteinander, laden sich elektrostatisch nicht auf und ergeben einen gleichmäßigen Tonerübertrag bei Verwendung sowohl von Trockentonern als auch flüssigen Tonern.

## Patentansprüche

1. Aufzeichnungsmaterial für elektrofotografische Druckverfahren, enthaltend ein Trägermaterial und mindestens eine toneraufnehmende Schicht, **dadurch gekennzeichnet, dass,** das die toneraufnehmende Schicht ein Glanzpigment mit einer Teilchengröße von höchstens 100 µm und einer, ein wasserdispergierbares und/oder ein wasserlösliches Bindemittel enthält.

2. Aufzeichnungsmaterial nach Anspruch 1, **dadurch gekennzeichnet, dass** das Glanzpigment eine Ölabsorption von 60 bis 120 g/100 g Pigment (gemessen nach EN ISO 787-5) aufweist.

3. Aufzeichnungsmaterial nach Anspruch 1 und 2, **dadurch gekennzeichnet, dass** das Glanzpigment eine Teilchengröße von 5 bis 60 µm aufweist.

4. Aufzeichnungsmaterial nach einem der Ansprüche 1 bis 3, **dadurch gekennzeichnet, dass** das wasserdispergierbare Bindemittel ein Ethylenacrylat-Polymer und/oder Ethylenacrylat-Copolymer ist.

5. Aufzeichnungsmaterial nach einem der Ansprüche 1 bis 4, **dadurch gekennzeichnet, dass** das wasserlösliche Bindemittel ein Polyvinylalkohol ist.

6. Aufzeichnungsmaterial nach einem der Ansprüche 1 bis 5, **dadurch gekennzeichnet, dass** das Mengenverhältnis Glanzpigment/Bindemittel 40:60 bis 60:40 beträgt.

7. Aufzeichnungsmaterial nach mindestens einem der Ansprüche 1 bis 6, **dadurch gekennzeichnet, dass** die toneraufnehmende Schicht ein wasserlösliches (Meth)acrylat-Acrylsäureester-Copolymer in einer Menge von 2 bis 12 Gew. %, bezogen auf die Masse der getrockneten Schicht enthält.

8. Aufzeichnungsmaterial nach mindestens einem der Ansprüche 1 bis 7, **dadurch gekennzeichnet, dass** die toneraufnehmende Schicht eine elektroleitfähige Substanz enthält.

9. Aufzeichnungsmaterial nach Anspruch 8, **dadurch gekennzeichnet, dass** die elektroleitfähige Substanz ein feinteiliges, elektroleitfähiges Pigment ist.

10. Aufzeichnungsmaterial nach Anspruch 8, **dadurch gekennzeichnet, dass** die leitfähige Komponente ein elektroleitfähiges Polymer ist.

11. Aufzeichnungsmaterial nach mindestens einem der Ansprüche 8 bis 10, **dadurch gekennzeichnet, dass** die Menge der elektroleitfähigen Substanz in der toneraufnehmenden 0,05 bis 4,0 Gew.-% beträgt, bezogen auf die Masse der getrockneten Schicht.

12. Aufzeichnungsmaterial nach mindestens einem der Ansprüche 1 bis 11, **dadurch gekennzeichnet, dass** das Trägermaterial ein harzbeschichtetes Basispapier ist.
